# EUROPEAN PATENT SPECIFICATION

(11) **EP 0 318 771 B1**
(45) Date of publication and mention of the grant of the patent: **20.01.1993**
(21) Application number: 88119190.2
(22) Date of filing: 18.11.1988
(51) Int. Cl.: B32B 27/06, B32B 15/08, B65D 65/40

(54) **Flexible packing laminate in the form of sheets or of a web, a method for the manufacture of the laminate and packing containers manufactured from the laminate**
Flexibler, bogen- oder bahnförmiger Verpackungsschichtstoff, Verfahren zur Herstellung des Schichtstoffes und aus dem Schichtstoff hergestellte Verpackungsbehälter
Stratifié flexible pour emballage en forme de feuille ou bande, procédé pour la fabrication du stratifié et récipients d'emballage fabriqués avec ce stratifié

(30) Priority: 01.12.1987 SE 8704789
(43) Date of publication of application: 07.06.1989
(73) Proprietor: ROBY TEKNIK AB, S-221 00 Lund (SE)
(72) Inventor: Frisk, Peter, S-211 43 Malmö (SE); Löfgren, Lars, S-245 00 Staffanstorp (SE)
(74) Representative: Sundell, Hakan

(56) References cited:
- CH-A- 595 210
- DE-C- 3 018 118
- GB-A- 1 175 003
- GB-A- 2 163 097

## Description

The present invention relates to a flexible packing laminate comprising a carrier layer of paper or cardboard, a gas-tight metal foil laminated to one side of the carrier layer, and thermoplastic/liquid-tight layers at each outer side of the laminate. The invention also relates to packing containers manufactured from the laminate.

In the technology of packaging the use of consumer packages of non-returnable character has been known for a long time for the packaging and handling of, among other things, liquid foodstuffs such as milk, juice etc. A very prevalent group of these so-called non-returnable packages is manufactured from a material consisting of a carrier layer of paper or cardboard and outer and inner liquid-tight coatings of plastics, usually thermoplastics. In many cases, depending on the product which is to be packed, the material in these packages is also provided with further layers of other material, e.g. aluminium foil or plastic layers other than those mentioned here.

The composition of the packing material is aimed at creating the best possible protection for the product which is to be packed, but also at providing the packages with sufficient mechanical strength and dimensional stability so as to make possible a convenient handling. To bring about mechanical rigidity which for one thing provides mechanical protection for the product and for another makes the package dimensionally stable so that it can be readily transported and gripped by hand the material in these packages is provided often with a relatively thick carrier layer of paper or cardboard. Such a material, however, has no tightness properties in respect of liquids or gases and the good rigidity in the material is rapidly lost if it is subjected to moisture or liquid which is absorbed into the material. To impart liquid-tightness to the material the carrier layer is provided, therefore, most frequently on both sides, with a plastic coating, and if this coating is thermo-plastic it can be used for sealing plastic layers to one another through so-called heat-sealing. In this manner packing containers can be sealed and made permanent in their intended shape in lasting fashion by heat-sealing thermoplastic-coated, overlapping material panels to one another in a tight and durable sealing joint.

Packing containers of the type mentioned here are manufactured either from blanks punched out in advance or from a web which had been prepared with appropriate decoration and with a crease line pattern facilitating the folding. Packing containers are manufactured from such a web by joining together the longitudinal edges of the web in an overlap joint so as to form a tube which subsequently is filled with the intended contents and divided into closed container units through repeated transverse seals of the tube at right angles to the longitudinal axis of the tube. After suitable folding of the packing material into the tube, the material in the container units is converted to the desired geometrical shape, generally a parallelepiped, in that the tube is provided with longitudinal folding lines and with double-walled, triangular folding lugs at the corner of the packing container.

During the forming of the packing container the laminated packing material is subjected to stresses which become especially great during the folding of the material, since owing to the relatively great material thickness of the carrier layer, the folding implies that the one plastic coating is subjected to a strong stretching at the same time as the other plastic coating is compressed to a corresponding degree along the folding line. Because of the considerable extensibility of the plastic coatings such a material folding only rarely causes the plastic coating extended through stretching to break or be damaged in some other manner and lose its liquid-tightness, but the situation is aggravated if the packing material also comprises an aluminium foil which by comparison with the plastic coatings has a very low extensibility and thus tends to crack during folding of the material.

Even though a single 180° folding of the packing material normally will not have any serious consequences regarding liquid-tightness and gas-permeability, considerable difficulties arise, however, when the material is to be folded along two crossing crease lines (so-called crossings). This is often the case in external sealing regions which always occur on this particular type of packing container. The seals in general are carried out in that plastic coatings facing towards the inside of the packing container are heated to melting along the edge zones which are to be sealed to one another, whereupon the heated plastic layers are pressed against one another to form a sealing fin, held together through material fusion on the outside of the packing container. Such a sealing fin comprises double material layers, and so as not to be an obstacle, the sealing fin often is folded down to lie flat against the outside of the packing container, which means that one of the material layers of the sealing fin undergoes a 180° folding and that the container wall in the region of the folded down sealing fin comprises three material layers, that is to say has a threefold material thickness. Such a sealing fin often runs along one or more lateral surfaces of the packing container, and since these lateral surfaces during the forming of, for example, parallelepipedic packages from cushionlike packages are subjected to a 180° folding along a crease line at right angles to the sealing fin, the material thickness in certain regions of the packing container will amount to six times the thickness of the laminate. During such a 180° folding transversely to the sealing region the outermost coated material layer will be subjected to very strong tensile stresses with subsequent extensions and crack formations in the material. These tensile forces often are so great that not only the aluminium foil includes in the laminate, but also the thermoplastic coatings crack, with the consequence that the packing container wall loses its tightness characteristics in these particularly exposed regions of the packing container. CH-A-595210 discloses a laminate for packing oxygen sensitive foodstuffs, consisting of, respectively, a layer of a heat-sealable polymer, a layer of aluminum acting as a gas barrier, a copolymer layer and a layer of moisture-impermeable polymer. The copolymer layer consists of a copolymer of 2-60 mole% α-olefin monomeric units and 20-95 mole% vinyl carboxylate monomeric units hydrolised for at least 85%, and acts as a gas barrier in case the aluminum layer is damaged.

In accordance with the present invention it has been found, however, that the risk of a packing laminate of the type described here losing its barrier characteristics, especially its gas-tightness, because of such crack formations in the metal foil of the laminate, can be substantially reduced, or even be wholly eliminated, if the packing laminate between the carrier layer and the metal foil is provided with a layer of ethylene-vinyl alcohol copolymer. Such a material layer can be made sufficiently durable so as to resist the strong stresses in connection with the folding of the laminate and have sufficiently good gas barrier characteristics to compensate effectively for the loss of gas-tightness which arises if cracking occurs in the main gas barrier of the packing laminate, that is to say the metal foil. A further valuable property of such an ethylene-vinyl alcohol copolymer layer is that it can be laminated directly between such layers by extrusion without the use of intermediate extra adhesive.

The invention, whose characteristics are evident from the subsequent claims will now be described with special reference to the attached drawing wherein
Fig.1 shows schematically a cross-section through a packing laminate in the form of sheets or of a web in accordance with the invention,
Fig.2 shows a corresponding section through a packing laminate in accordance with a preferred embodiment of the invention, and
Fig.3 shows schematically an arrangement by means of which a packing laminate of the type which is shown in Fig.2 can be manufactured.

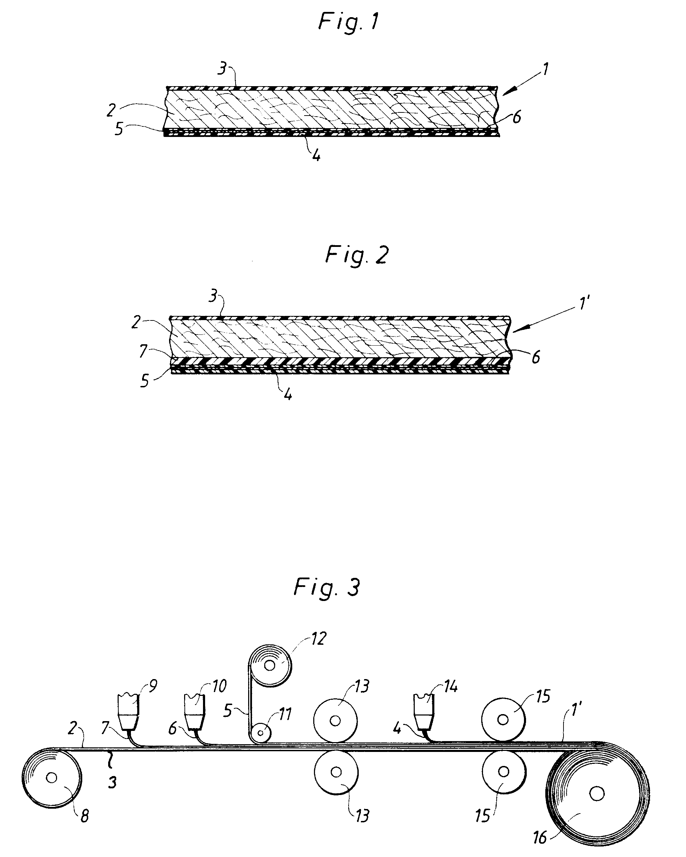

The packing laminate 1 in Fig.1 comprises in conformity with a conventional packing laminate a relatively thick carrier layer 2 of paper or cardboard imparting rigidity, and outer coatings 3 and 4 of thermoplastics. Between the carrier layer 2 and the one outer plastic layer 4 which is intended so as to face towards the inside of the packing container there is a thin aluminium foil 5 which constitutes the main gas barrier of the laminate. With the object of improving the gas barrier characteristics of the material, the laminate 1 in accordance with the invention has laminated between the carrier layer 2 and the aluminium foil 5 a layer 6 of ethylene-vinyl alcohol copolymer which can be made durable to resist the external stresses to which the packing laminate is subjected in connection with being converted to packing containers, and which at the same time has sufficiently good gas barrier characteristics to compensate for the loss in gas tightness which the laminate experiences if small crack formations or corresponding leakage were to occur in the aluminium foil.

Fig.2 shows a packing laminate 1' in accordance with a preferred embodiment of the invention. To achieve greater clarity the same reference designations have been used as in Fig.1 for identical material layers. The packing laminate 1' in Fig.2 differs from the laminate according to Fig. 1 in that it is provided between the said layer of ethylene-vinyl alcohol copolymer 6 and the carrier layer 2 with a layer 7 of moisture-permeable material. The material layer 7 serves to absorb the moisture which might be able to penetrate into the ethylene-vinyl alcohol copolymer layer 6 through crack formations in the aluminium foil 5 and the inner plastic coating 4 and which otherwise, if present in sufficiently large quantities, could impair the gas barrier characteristics of the ethylene-vinyl alcohol copolymer layer, and thereby cause it to be less effective as an extra gas protection in the laminate in accordance with the invention. The material layer 7 is in general not necessary, but is preferred if the packing laminate is in danger of being subjected to such strong external stresses, that not only the aluminium foil 5, but also the inner plastic coating 4 are liable to undergo crack formation. The material layer 7 preferably consists of a polyamide, e.g. nylon 6, which possesses good adhesive powers in respect of the ethylene-vinyl alcohol copolymer layer 6 as well as the paper or cardboard layer 2 and, therefore, is easy to laminate between these two layers through extrusion without the use of extra intermediate adhesive layers.

A packing laminate which works well according to the invention can be built up of material layers laminated to one another of the material thicknesses given below:
outer plastic coating 3 approx. 10 µm
paper or cardboard layer 2 approx. 300 µm
polyamide layer 7, 15-25, preferably 20 µm
ethylene-vinyl alcohol copolymer layer 6, 3-10, preferably 5 µm
aluminium foil 5 approx. 5 µm
one or more outer plastic coatings 4 each approx. 10 µm
The packing laminate in accordance with the invention can be manufactured in the manner which is illustrated in Fig.3. A web 2 of paper or cardboard, which on one side (Fig.3 bottom) is coated with an extruded plastic layer 3, is reeled off a magazine roll 8 and is guided past a first extruder 9, which deposits a layer 7 of molten polyamide on the free side of the web, and further past a second extruder 10, which deposits a layer of molten ethylene-vinyl alcohol copolymer on top of the polyamide layer, and further past a deflection roller 11, lightly pressed against the web, which guides an aluminium foil 5, reeled off a magazine roll 12, to lie flat against the web travelling past. In accordance with the invention the said two layers 6 and 7 may be applied , of course, at the same time by means of co-extrusion, which has been found to give advantageous results. From the deflection roller 11 the web so laminated is advanced to, and through the nip between, two corotational cooling rolls 13, pressed against each other with a light pressure, which compress and cool the previously deposited layers so that they are lastingly joined together. From the cooling rolls 13 the laminated is advanced further past one or several further extruders 14 which bring on one or more further plastic coats 4. The laminate so coated with plastics finally is passed through the nip between a further pair of co-rotational cooling rolls 15 which compress the laminated material layer to form the finished, well-coherent packing laminate 1' which thereafter is wound up on a magazine roll 16.

## Claims

1. A packing laminate, this laminate comprising a carrier layer (2) of paper or cardboard, a gas-tight metal foil (5) laminated against one side of the carrier layer, and thermoplastic/liquid-tight layers (3 and 4) at each outer side of the laminate, **characterized in that** the laminate comprises a layer (6) of ethylene-vinyl alcohol copolymer arranged between the base layer (2) and the metal foil (5).

2. A packing laminate in accordance with claim 1,
**characterized in that** the layer (6) of ethylene-vinyl alcohol copolymer is produced through extrusion and is attached directly to the metal foil (5).

3. A packing laminate in accordance with claim 1 or 2,
**characterized in that** it has a layer (7) of moisture-permeable material between the layer (6) of ethylene-vinyl alcohol copolymer and the carrier layer (2).

4. A packing laminate in accordance with claim 3,
**characterised in that** the moisture-permeable layer (7) consists of a polyamide.

5. A packing laminate in accordance with claim 3 or 4,
**characterized in that** the moisture-permeable layer (7) is produced through extrusion and is attached directly to the surrounding layer (6) of ethylene-vinyl alcohol copolymer and the carrier layer (2).

6. A packing container, **characterized in that** it is manufactured from a packing laminate according to anyone of claims 1-5.

## Patentansprüche

1. Verpackungslaminat mit einer Trägerlage (2) aus Papier oder Pappe, einer gasdichten Metallfolie (5), die gegen eine Seite der Trägerlage laminiert ist, sowie mit thermoplastischen/flüssigkeitsdichten Lagen (3 und 4) an jeder äußeren Seite des Laminats, dadurch gekennzeichnet, daß das Laminat eine Lage (6) aus Ethylenvinylalkoholcopolymer aufweist, die zwischen der Basislage (2) und der Metallfolie (5) angeordnet ist.

2. Verpackungslaminat nach Anspruch 1, dadurch gekennzeichnet, daß die Lage (6) aus Ethylenvinylalkoholcopolymer durch Extrudieren hergestellt und direkt an der Metallfolie (5) befestigt wird.

3. Verpackungslaminat nach Anspruch 1 oder 2, dadurch gekennzeichnet, daß es zwischen der Lage (6) aus dem Ethylenvinylalkoholcopolymer und der Trägerlage (2) eine Lage (7) aus einem feuchtigkeitsdurchlässigen Material aufweist.

4. Verpackungslaminat nach Anspruch 3, dadurch gekennzeichnet, daß die feuchtigkeitsdurchlässige Lage (7) aus einem Polyamid besteht.

5. Verpackungslaminat nach Anspruch 3 oder 4, dadurch gekennzeichnet, daß die feuchtigkeitsdurchlässige Lage (7) durch Extrudieren hergestellt und direkt an der umgebenden Lage (6) aus dem Ethylenvinylalkoholcopolymer und der Trägerlage (2) angebracht wird.

6. Verpackungsbehälter, dadurch gekennzeichnet, daß er aus einem Verpackungslaminat nach einem der Ansprüche 1-5 hergestellt ist.

## Revendications

1. Stratifié pour emballage, ce stratifié comprenant une couche de support (2), en papier ou carton, une pellicule métallique (5), étanche aux gaz et appliquée de manière stratifiée sur l'une des faces de cette couche de support, et des couches de matière thermoplastique (3 et 4) étanches aux liquides et disposées sur chaque face extérieure du stratifié, caractérisé en ce qu'il comprend une couche (6) en copolymère éthylène-alcool vinylique disposée entre la couche de base (2) et la pellicule métallique (5).

2. Stratifié d'emballage suivant la revendication 1, caractérisé en ce que la couche (6) en copolymère éthylène-alcool vinylique est produite par extrusion et est fixée directement sur la pellicule métallique (5).

3. Stratifié d'emballage suivant la revendication 1 ou 2, caractérisé en ce qu'il comprend une couche (7) en matériau perméable à l'humidité disposée entre la couche (6) en copolymère éthylène-alcool vinylique et la couche de support (2).

4. Stratifié d'emballage suivant la revendication 3, caractérisé en ce que la couche perméable à l'humidité (7) est constituée d'un polyamide.

5. Stratifié d'emballage suivant la revendication 3 ou 4, caractérisé en ce que la couche perméable à l'humidité (7) est produite par extrusion et fixée directement sur la couche voisine (6) en copolymère éthylène-alcool vinylique et sur la couche de support (2).

6. Récipient d'emballage, caractérisé en ce qu'il est fabriqué à partir d'un stratifié pour emballage conforme à l'une quelconque des revendications 1 à 5.
